# EUROPEAN PATENT SPECIFICATION

(11) **EP 4 515 179 B1**
(45) Date of publication and mention of the grant of the patent: **09.12.2026**
(21) Application number: 22720080.5
(22) Date of filing: 25.04.2022
(51) Int. Cl.: G01C 21/20, B60W 30/08, G05D 1/00, G06V 20/58, G08G 1/16

(54) **METHOD, CONTROL UNIT AND VEHICLE IN A MINING ENVIRONMENT**
VERFAHREN, STEUEREINHEIT UND FAHRZEUG IN EINER BERGBAUUMGEBUNG
PROCÉDÉ, UNITÉ DE COMMANDE ET VÉHICULE DANS UN ENVIRONNEMENT D'EXPLOITATION MINIÈRE

(43) Date of publication of application: 05.03.2025
(73) Proprietor: Epiroc Rock Drills Aktiebolag, 701 91 Örebro (SE)
(72) Inventor: KALANDER, Jan, 701 91 Örebro (SE)
(74) Representative: Epiroc Rock Drills AB
(86) International application number: PCT/SE2022/050395
(87) International publication number: WO 2023/211319

(56) References cited:
- US-A1- 2022 083 072

## Description

### TECHNICAL FIELD

The present disclosure relates to a method and arrangements for obstacle detection in an underground mining environment.

### BACKGROUND

In mining and tunneling, there is a constant ongoing process of improving efficiency, productivity and safety. Examples of changes and/or improvements that are carried out to an increasing extent, especially in mining, is the automation, fully or partly, of various processes occurring in mining. Methods for localization, mapping, control and motion planning have enabled development and deployment of fully or partly autonomous vehicles and/or mobile machines, hereinafter denoted as vehicle.

To prevent collisions with other vehicles, one solution is to set up automated routes completely separated from each other and also take remote-controlled vehicles into consideration. A traffic control system may be used to set up the automated routes and to ensure that only one vehicle at a time gets access to a common zone.

A problem when using an automated route for a vehicle is reacting to, and handling, external events in the vehicle's surrounding environment. This may e.g., be other vehicles and/or unexpected objects.

Methods for obstacle detection are meant to act as a backup solution to prevent collisions with unexpected objects while a vehicle is driving autonomously. Possible objects to collide with may, e.g., be other vehicles, infrastructure that has been ripped from the roof or walls, or rocks that may have been dropped by other vehicles.

Current obstacle detection methods look for objects in a detection zone in front of the vehicle. When an object is detected in the detection zone, obstacle handling functionality is triggered in the vehicle. However, when driving at high speed in long narrow corridors, or during sharp turns, current methods may result in false detections of obstacles in the detection zone. Reliable obstacle detection is even more important as the autonomous driving of vehicles gets more advanced, and the speed of the vehicles increases. False detection of obstacles may increase the risk of unnecessary stops of the vehicles, resulting in a negative impact on production, as well as damage to the vehicles and the mining environment and safety issues when a manual action in the mining environment is needed.

Consequently, there is a need for improvements in obstacle detection during autonomous driving.

Related background art can be found in patent application US2022/083072 A1.

### SUMMARY

As part of developing embodiments herein, a problem has been identified and will first be discussed.

Existing solutions for obstacle detection uses obtained sensor data to determine whether an obstacle is present in front of a vehicle operating in the mining environment. The sensor data is obtained by one or more sensor scanning the mining environment in front of the vehicle. When an obstacle is detected, the vehicle is stopped to avoid a collision. Autonomously driving mining vehicles follow a specific route. In the existing solutions, the route the vehicle is following is not considered when performing obstacle detection. Because of this, there is an increased risk of false detection of obstacles, resulting in unnecessary stops of the vehicle. This may have a negative impact on production and may also cause stops for other vehicles in mining environment.

An object of embodiments herein is to provide a mechanism that increases efficiency in obstacle detection for a vehicle operating in a mining environment. The object is achieved by the independent claims.

According to a first aspect, a computer-implemented method for obstacle detection for a vehicle operating in a mining environment is provided. An obstacle detection zone is determined along an obtained vehicle route in front of the vehicle. The vehicle route comprises multiple route segments. The obstacle detection zone comprises a first detection zone and one or more subsequent detection zones. The first detection zone is located at a first route segment. The respective one or more subsequent detection zones is located along the obtained vehicle route. The one or more subsequent detection zones are determined based on a geometrical shape of the vehicle, a geometrical shape of an immediately preceding detection zone, and/or a detected vehicle route offset. A geometrical shape of at least one of the one or more subsequent detection zones represents a reduction of the geometrical shape of the first detection zone. When detecting an obstacle within the obstacle detection zone, an obstacle alert indication is provided to a vehicle control system.

According to a second aspect, a control unit configured to provide obstacle detection for a vehicle adapted to operate in a mining environment is provided. The control unit comprises a memory operable to store instructions and processing circuitry operable to execute the instructions. By executing the instructions, the control unit is operable to determine an obstacle detection zone along an obtained vehicle route in front of the vehicle. The vehicle route being adapted to comprise multiple route segments. The obstacle detection zone is adapted to comprise a first detection zone and one or more subsequent detection zones. The first detection zone is adapted to be located at a first route segment. The respective one or more subsequent detection zones are adapted to be located along the obtained vehicle route. The one or more subsequent detection zones are adapted to be determined based on a geometrical shape of the vehicle, a geometrical shape of an immediately preceding detection zone, and/or a detected vehicle route offset. A geometrical shape of at least one of the one or more subsequent detection zones represents a reduction of the geometrical shape of the first detection zone. When detecting an obstacle within the obstacle detection zone, the control unit provides an obstacle alert indication to a vehicle control system.

According to a third aspect, a vehicle adapted to operate in a mining environment is provided. The vehicle comprises a control unit according to the second aspect. The control unit is configured to provide obstacle detection for the vehicle. The control unit comprises a memory operable to store instructions and processing circuitry operable to execute the instructions. By executing the instructions, the control unit is operable to determine an obstacle detection zone along an obtained vehicle route in front of the vehicle. The vehicle route being adapted to comprise multiple route segments. The obstacle detection zone is adapted to comprise a first detection zone and one or more subsequent detection zones. The first detection zone is adapted to be located at a first route segment. The respective one or more subsequent detection zones are adapted to be located along the obtained vehicle route. The one or more subsequent detection zones are adapted to be determined based on a geometrical shape of the vehicle, a geometrical shape of an immediately preceding detection zone, and/or a detected vehicle route offset. A geometrical shape of at least one of the one or more subsequent detection zones represents a reduction of the geometrical shape of the first detection zone. When detecting an obstacle within the obstacle detection zone, the control unit provides an obstacle alert indication to a vehicle control system.

It is furthermore provided herein a computer program comprising instructions, which, when executed on at least one processor, cause the at least one processor to carry out the computer-implemented method above, as performed by the control unit.

Since the control unit determines the obstacle detection zone that is located along the obtained vehicle route of the vehicle, it is possible to detect obstacles in the proximity to the vehicle. The obstacle detection comprises the first detection zone and the one or more subsequent detection zones. The first detection zone is located at the first route segment and the subsequent detection zones are located along the vehicle route. The one or more subsequent detections zones are determined based on the geometrical shape of the vehicle, the geometrical shape of an immediately preceding subsequent detection zone and/or a vehicle route offset. When control unit detects an obstacle within the obstacle detection zone, the control unit provides an obstacle alert indication to the vehicle control system. This way a flexible obstacle detection for a vehicle operating in a mining environment is achieved.

Embodiments herein bring the advantage of improved obstacle detection for a vehicle operating in a mining environment. This is achieved by making it possible to determine an obstacle detection zone for the vehicle. The obstacle detection comprises a first detection zone and one or more subsequent detection zones that are located along the route and are determined to have a geometrical shape that is based on a geometrical shape of the vehicle, a geometrical shape of an immediately preceding subsequent detection zone and/or a vehicle route offset, which leads to an improved and more flexible obstacle detection for a vehicle operating in a mining environment, which in turn leads to increased efficiency when operating a vehicle in the mining environment.

Further, embodiments herein bring the advantage of improved route tracking and route convergence. This since the obstacle detection is determined along the route of the vehicle, and the first detection zone and the one or more subsequent detection zones may be determined based on a vehicle route offset. Further, embodiments herein bring the advantage of a reduced number of false obstacle detection is decreased. This since the obstacle detection zone follows the route of the vehicle, objects outside the obstacle detection zone is not determined to be obstacles, which results in a reduced numbed of unnecessary stops of the vehicle.

### BRIEF DESCRIPTIONS OF DRAWINGS

Examples of embodiments herein are described in more detail with reference to attached drawings in which:
- **Fig. 1**: is an example depicting an obstacle detection zone according to prior art.
- **Fig. 2**: is a schematic illustration of a vehicle.
- **Fig. 3a**: discloses an example obstacle detection zone according to embodiments herein
- **Fig. 3b**: discloses an example obstacle detection zone according to embodiments herein.
- **Fig. 3c**: discloses an example obstacle detection zone according to embodiments herein
- **Fig. 4**: is a flowchart depicting embodiments of a computer-implemented method.
- **Figs. 5**: **a-b** are schematic block diagrams illustrating embodiments of a control unit.

### DETAILED DESCRIPTION

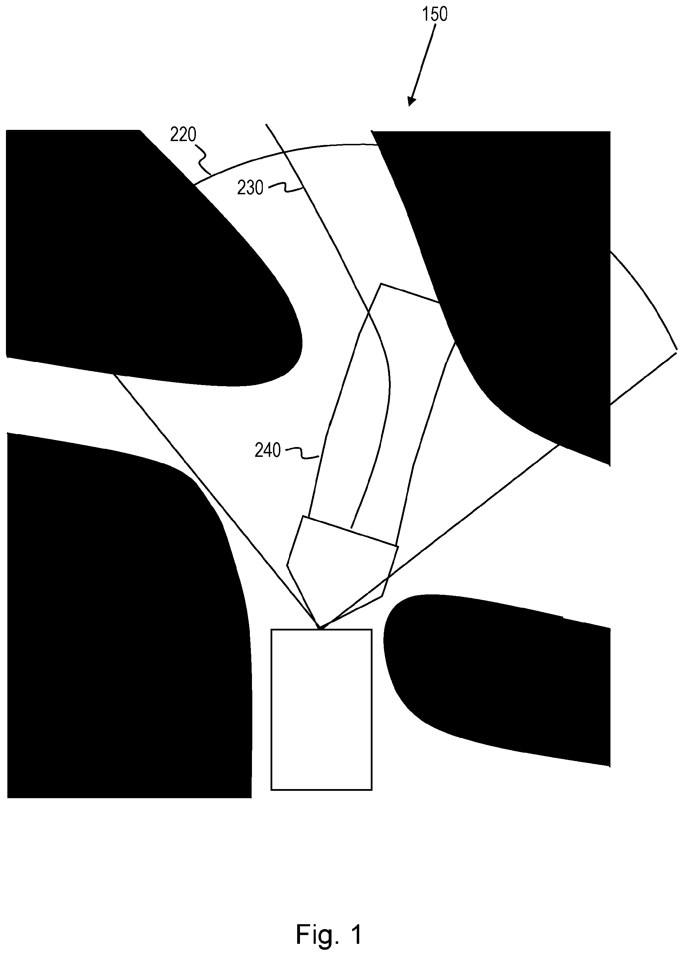

**Fig. 1** shows a schematic illustration of a vehicle operating in a **mining environment 150.** The vehicle implements a method for obstacle detection in the proximity of the vehicle according to prior art. The obstacle detection method checks for objects in an object detection zone in front of the vehicle. When an object is detected in the object detection zone, obstacle handling functionality is triggered in the vehicle to determine if the object is located in an obstacle detection zone. However, when driving at high speed in long narrow corridors, or during sharp turns, current methods may result in false detections of obstacles in the obstacle detection zone.

In an example, the object detection zone, e.g., the **object detection zone 220** in Fig. 1, is formed as an arc in front of the vehicle. An object detected in the object detection zone 220 is determined to be an obstacle when the object is located within the obstacle detection zone, e.g., the **obstacle detection zone 240** in Fig. 1. The obstacle detection zone 240 is located in front of the vehicle in the object detection zone 220. The geometrical shape of the obstacle detection zone 240 may e.g., be based on the hinge angle of the vehicle and/or the turning position of the wheels of the vehicle. E.g., the vehicle follows a vehicle route, e.g., the **vehicle route 230** in Fig. 1.

As shown in Fig. 1, the obstacle detection zone 240 hits the wall of the mining environment 150, which may result in that the wall is detected as an object in the detection zone, and thus determined to be an obstacle. This will result in a false obstacle detection and an unnecessary stop of the vehicle. Reliable obstacle detection is even more important as the autonomous driving of vehicles gets more advanced, and the speed of the vehicles increases. False detection of obstacles may increase the risk of unnecessary stops of the vehicles, resulting in a negative impact on production, as well as damage to the vehicles and the mining environment and safety issues when a manual action in the mining environment is needed.

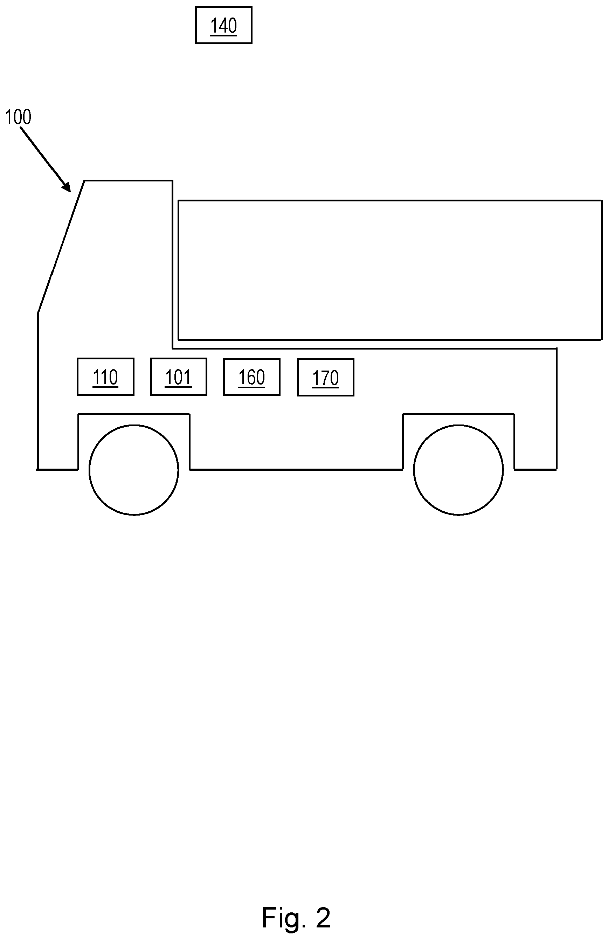

**Fig. 2** shows **a vehicle 100** adapted to operate in a mining environment. The vehicle may, e.g., be a loader, a drill rig, a truck, or other type of mobile mining equipment, machine or vehicle located in the mining environment. The vehicle 100 comprises **a control unit 110** for providing obstacle detection for the vehicle 100. The control unit is configured and/or operable to determine an obstacle detection zone along an obtained vehicle route of the vehicle 100, and when detecting an obstacle within the obstacle detection zone, the control unit 110 provides an obstacle alert indication to a **vehicle control system 101.** The vehicle 100 may comprise the vehicle control system 101. The vehicle 100 may comprise one or more sensors, such as one or more **obstacle detection sensors 160** and one or more **positioning sensors 170.** The one or more obstacle detection sensors 160 may e.g., be configured for detecting objects in the proximity of the vehicle 100. The one or more positioning sensors 170 may further be configured to detect objects in a three-dimensional volume in front of the vehicle 100. The one or more positioning sensors may, e.g., be used to determine the position of the vehicle 100.

The control unit 110 may be located onboard the vehicle 100 operating in the mining environment. The control unit 110 may detect obstacles along the vehicle route of the vehicle 100, e.g., by detecting obstacle within the determined obstacle detection zone. The obstacle detection may be determined along the vehicle route in front of the vehicle 100 and comprise multiple detection zones, e.g., a first detection zone and one or more subsequent detection zones. In some examples, the length of the obstacle detection zone is variable, and based on different inputs, e.g., the type of the vehicle 100, a velocity of the vehicle 100, the route of the vehicle 100, a location of the vehicle 100 and/or a brake distance of the vehicle 100. The control unit 110 may determine the length of the obstacle detection zone. In other words, the control unit 110 detects obstacles along the vehicle route in front of the vehicle 100 by, e.g., adaptively, determining the obstacle detection zone comprising the first detection zone and the one or more subsequent detection zones, and providing an obstacle alert indication when an obstacle is detected within the obstacle detection zone. This in order to minimize the risk of unnecessary stops caused by false detection of obstacles. The control unit 110 may be configured and/operable to communicate with a **traffic control system 140.**

The traffic control system 140 may be configured and/or operable to prevent collisions and/or to optimize the traffic flow in the mining environment, e.g., by determining and/or providing driving routes to vehicles operating in the mining environment, such as e.g., the vehicle 100. The control unit 110 may be partly and/or completely located in a remote system, e.g., in, or connected to, the traffic control system 140, and/or in a separate remote system, e.g., in a cloud system and/or a server. In other words, parts of the functionality in the control unit 110 may be distributed between the control unit 110 in the vehicle 100 and a control unit 110 located remotely. Alternatively, all functionality in the control unit 110 may be located remotely, either in one remote system or distributed between more than one remote systems.. The vehicle control system 101 may be configured and/or operable to operate the vehicle 100, e.g., operate the vehicle to perform tasks and/or operations in the mining environment. The vehicle control system 101 may further control and/or communicate with other systems in the vehicle 100, such as the control unit 110, and/or with remote systems, nodes or entities, such as the traffic control system 140, a control unit partly and/or completely located remotely from the vehicle 100, and/or with other vehicles operating in the mining environment.

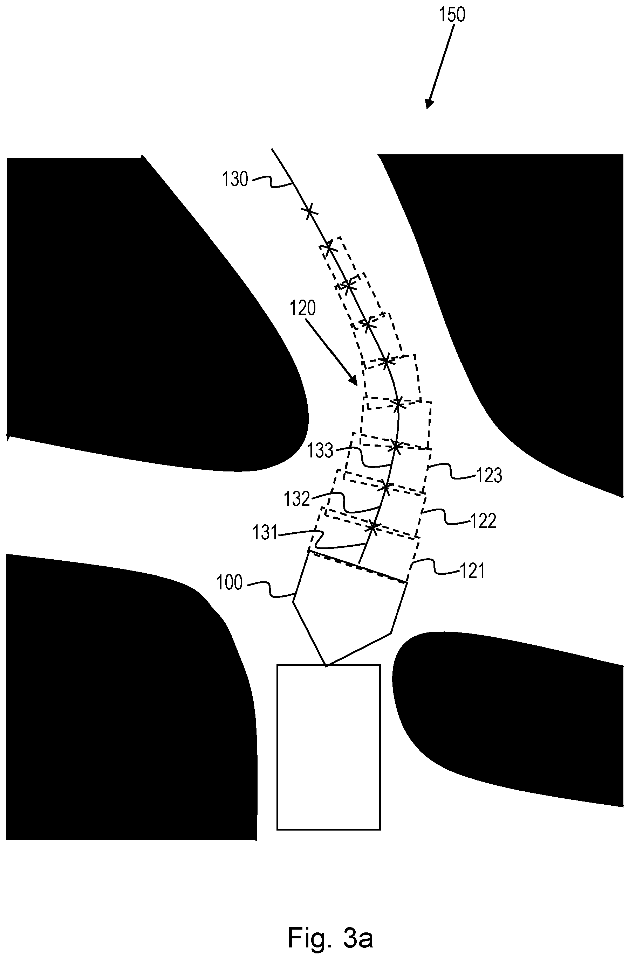

**Fig. 3a** shows an example of a vehicle, e.g., the vehicle 100 described in relation with Fig. 2, operating in a mining environment 150. The vehicle 100 implements an obstacle detection method according to examples of embodiments herein. The vehicle 100 follows a vehicle route 130 in the mining environment 150. The vehicle route 130 comprises multiple route segments, such as the route segments 131, 132, 133. An obstacle detection zone 120 has been determined.

According to the example in Fig. 3a, the vehicle route 130 comprises all the depicted multiple route segments, though for the sake of clarity, only the route segments 131, 132, 133 are depicted with reference numbers. The obstacle detection zone 120 comprises multiple detection zones, such as a first detection zone 121 one or more subsequent detection zones 122, 123. The multiple detection zones are depicted as the dashed rectangles in Fig. 3a. Having rectangles shaped detection zones is only to be viewed as an example, any other geometrical shape is possible such as trapezoids, parallelograms, rhombuses, semi circles. The geometrical shapes used herein for describing the detection zone is a simplified way to describe the area in front of the vehicle 100 and along the vehicle route 130 where a detected object would be considered to be an obstacle. Both two-dimensional and three-dimensional geometrical shapes are possible. The area where objects are detected, also referred to as object detection zone, by one or more obstacle detection sensors, e.g., the one or more obstacle detection sensors 160, may be larger than, and comprise, the obstacle detection zone 120. E.g., the object detection zone may be formed as an arc in front of the vehicle 100, or any other shape depending on the configuration of the one or more obstacle detection sensors 160. Both two-dimensional and three-dimensional object detection zones are possible.

According to the example in Fig. 3a, the obstacle detection zone 120 comprises all the depicted multiple detection zones, though for the sake of clarity, only the first detection zone 121 and the subsequent detection zones 122, 123 are depicted with reference numbers. In this example, the first detection zone 121 and the subsequent detection zones 122, 123 have geometrical shapes equalling rectangles. Each of the first detection zone and the subsequent detection zones are located at a corresponding route segment 131, 132, 133. This may mean that the obstacle detection zone 120 follows the vehicle route 130. The geometrical shape of each of the subsequent detection zones 122, 123 represents a reduction of the geometrical shape of the first detection zone 121. Accordingly, in this example, the width of the subsequent detection zones 122, 123 are successively smaller. An object is determined to an obstacle when the object is located within the obstacle detection zone 120. This also means that the object is determined to an obstacle when the object is located within at least one of the detection zones, e.g., at least one of the first detection zone 121 and the subsequent detection zones 122, 123.

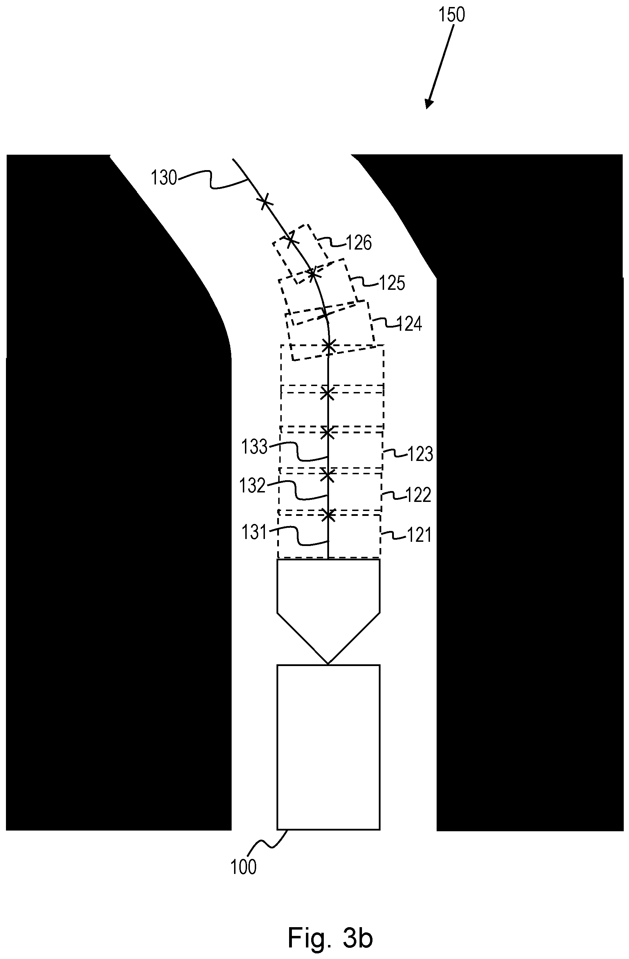

**Fig. 3b** shows an example of a vehicle, e.g., the vehicle 100 described in relation with Fig. 2, operating in a mining environment 150. The vehicle 100 implements an obstacle detection method according to examples herein. As described in the description of Fig. 3a, the vehicle 100 follows a vehicle route 130 comprising multiple route segments 131, 132, 133 and an obstacle detection zone 120 comprising multiple detection zones 121, 122, 123 has been determined. According to this example, the vehicle 100 is driving in a straight line in the mining environment 150, and will soon reach a turn in the vehicle route 130. As shown in Fig. 3b, the obstacle detection comprises a number of detection zones, such as the first detection zone 121 and the subsequent detection zone 122, 123, that have the same width. The obstacle detection zone 120 further comprises one or more subsequent detection zones 124, 125, 126. The subsequent detection zones 124, 125, 126 have a geometrical shape that is a reduction of any preceding subsequent detection zones 121, 122, 123.

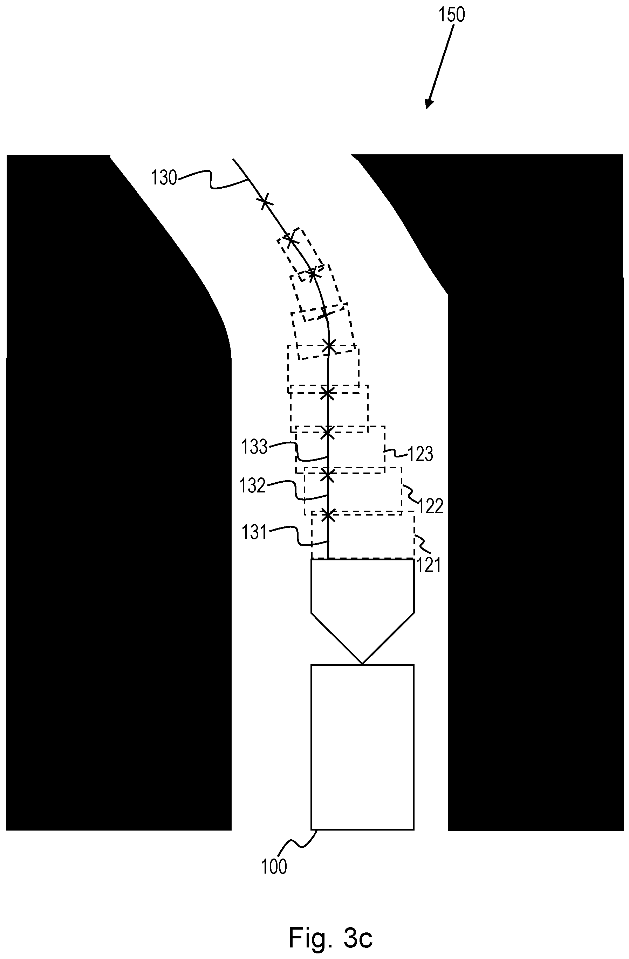

**Fig. 3c** shows an example of a vehicle, e.g., the vehicle 100 described in relation with Fig. 2, operating in a mining environment 150. The vehicle 100 implements an obstacle detection method according to examples herein. As described in the description of Fig. 3a, the vehicle 100 follows a vehicle route 130 comprising multiple route segments 131, 132, 133 and an obstacle detection zone 120 comprising multiple detection zones 121, 122, 123 has been determined. According to this example, the vehicle 100 is not centred along the vehicle route 130, meaning that the vehicle 100 suffers from a vehicle route offset. This may, e.g., be because the vehicle 100 is starting from a parked position, or the vehicle 100 may have suffered from deteriorated localization and been unable to follow the vehicle route 130. As shown in Fig. 3c, the obstacle detection comprises a number of detection zones, such as the first detection zone 121 and the subsequent detection zone 122, 123, that have been determined to have an offset in relation to the vehicle route 130, and a corresponding route segment 131, 132, 133. The offsets are successively decreased with every subsequent detection zone 122, 123 until they are centred around the corresponding route segment. This may be because it is assumed, when determining the obstacle detection zone 120, that the vehicle 100 will try to reduce vehicle route offset until it disappears and the vehicle 100 is centred along the vehicle route 130.

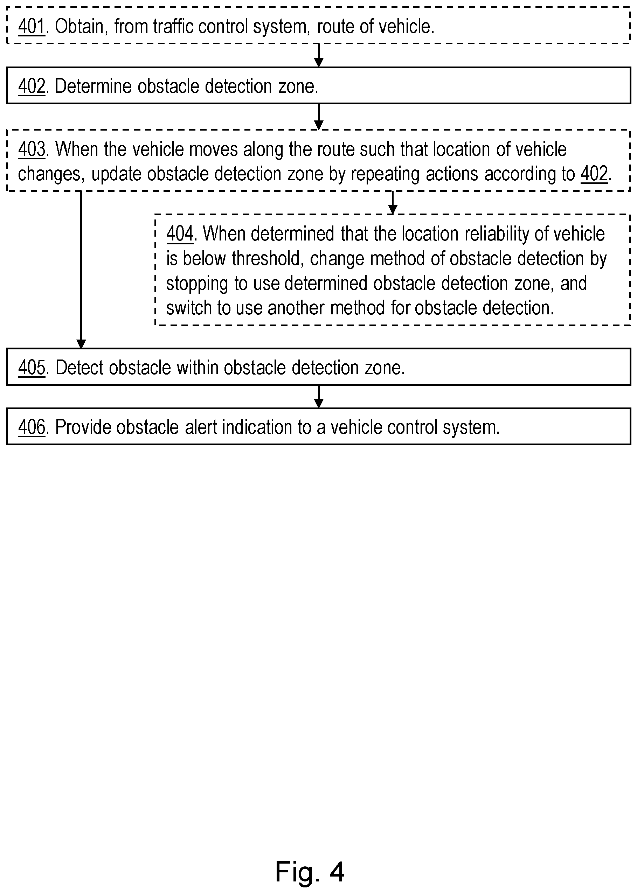

**Fig. 4** shows an example embodiment of a computer-implemented method for obstacle detection for a vehicle operating in a mining environment. The method may be implemented in processing circuitry comprised in a control unit. The vehicle, control unit and mining environment may be the vehicle 100, control unit 110 and mining environment 150 described in Figs. 2 and 3a-c. In the following example embodiment, the computer-implemented method will be described as if implemented in the control unit 110. This is only an example, and the computer-implemented method may be implemented by any entity. The method comprises the following actions, which may be taken in any suitable order. Optional actions are referred to as dashed boxes in Fig. 4.

### Action 401

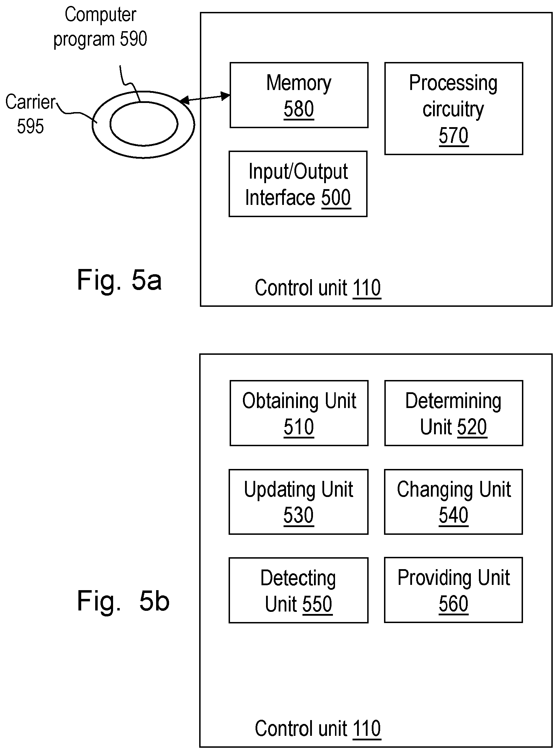

In some embodiments the control unit 110 obtains a vehicle route 130 of the vehicle from a traffic control system 140. The vehicle route 130 may be stored in a memory 580, as described below together with Figs 5a and b, in the control unit 110. Obtaining may mean receiving the vehicle route 130 from the traffic control system 140.

### Action 402

In order to avoid collisions, obstacles need to be detected. The control unit 110 determines an obstacle detection zone 120 along the obtained vehicle route 130 in front of the vehicle 100. The route 130 comprising multiple route segments 131, 132, 133. The obstacle detection zone comprises a first detection zone 121 and one or more subsequent detection zones 122, 123. The first detection zone 121 is located at a first route segment 131 and the respective one or more subsequent detection zones 122, 123 is located along the obtained route 130. The one or more subsequent detection zones 122, 123 are determined based on a geometrical shape of the vehicle 100, a geometrical shape of an immediately preceding detection zone, and/or a detected vehicle route offset. The geometrical shape of the first detection zone 121 and the one or more subsequent detection zones 122, 123 may be the same geometrical shape. Alternatively, the geometrical shapes of at least one of the first detection zone 121 and the one or more subsequent detection zones 122, 123 may be of a different geometrical shape than the other. The geometrical shapes may be two dimensional shapes, e.g., rectangles, trapezoids, parallelograms, rhombuses, semi circles, or any geometrical shape. A vehicle route offset may mean that the vehicle is not centred on the vehicle route 130. As an example, the vehicle 100 is not centred on the vehicle route 130, but rather located with a certain offset, such as a distance, sideways compared to the vehicle route 130. The one or more subsequent detection zones 122, 123 may then be determined taking this offset into account. This may comprise that the one or more subsequent detection zones 122, 123 are determined to have the same offset in relation to the vehicle route 100. The same reasoning may apply to the first detection zone 121. Alternatively, for each subsequent detection zone 122, 123 the vehicle route offset may be successively decreased until one of the subsequent detection zones 122, 123 is centred on the vehicle route 130.

In some embodiments, each subsequent detection zone 122, 123 is located at a respective subsequent route segment 132, 133. This may mean that each subsequent detection zone is located at a specific subsequent route segment 132, 133. Located a route segment mean that the location subsequent detection zone 122, 123 corresponds the location of a subsequent route segment 132, 133.

In some embodiments, a geometrical shape of at least one of the one or more subsequent detection zones 122, 123 represents a reduction of the geometrical shape of the first detection zone 121. Thus, the size of the geometrical shape of the at least one subsequent detection zone 122, 123 is smaller than the size of the geometrical shape of the first detection zone 121. Further, the size of the geometrical shape of each of the one or more subsequent detection zones 122, 123 may be successively decreased. Successively decreased may mean that the size of the geometrical shape of a subsequent detection zone 123 is smaller than the size of the geometrical shape of a preceding subsequent detection zone 122. In other words, the size of the geometrical shape of the one or more subsequent detection zones 122, 123 may be decreased the farther away from the first detection zone 121 it is located. Alternatively, the size geometrical shape of at least one of the one or more subsequent detection zones 122, 123 may be decreased compared to the first detection zone 121 and/or a preceding subsequent detection zone 122, 123.

In some embodiments, the geometrical shape of at least one of the subsequent detection zones 122, 123 may represent an increase of the geometrical shape of the first detection zone 121 and/or a preceding subsequent detection zone 122, 123. Thus, the geometrical shape, e.g., the size of the geometrical shape, of a subsequent detection zone 122, 123 may be increased compared to the first detection zone 121 and/or a preceding subsequent detection zone 122, 123. This may mean that the geometrical shape of the one or more subsequent detection zones 122, 123 may be adapted based on certain properties related to, e.g., the vehicle type of the vehicle 100 and/or the vehicle route 130. This is described in more detail further down in the description.

In some embodiments, the first detection zone 121 has a first width and the one or more subsequent detection zones 122, 123 have successively decreasing widths. The width may be measured perpendicular to a corresponding route segment 131, 132, 133. The first detection zone 121 may be positioned closer the vehicle 100 than any of the one or more subsequent detection zones 122, 123. Successively decreased may mean that the width of the one or more subsequent detection zones 122, 123 is smaller the width of the first detection zone 121 and the width of any preceding subsequent detection zone 121, 122. The width of the first detection 121 may correspond to the width of the geometrical shape of the first detection zone 121. The width of the one or more subsequent detection zones 122, 123 may correspond to the width of the geometrical shape of the respective one or more subsequent detection zones 122, 123. In other words, the width of the one or more subsequent detection zones 122, 123 may be decreased the farther away from the first detection zone 121 it is located. Alternatively, the width of at least one of the one or more subsequent detection zones 122, 123 may be decreased compared to the first detection zone 121 and/or a preceding subsequent detection zone 122, 123.

In some embodiments, the width of at least one of the one or more subsequent detection zones 122, 123 represents an increase of the width of the first detection zone 121 and/or a preceding subsequent detection zone 122, 123. Thus, the width of a subsequent detection zone 122, 123 may be increased compared to the first detection zone 121 and/or a preceding subsequent detection zone 122, 123. This may mean that the width of the one or more subsequent detection zones 122, 123 may be adapted based on certain properties related to, e.g., the vehicle type of the vehicle 100 and/or the vehicle route 130. This is described in more detail further down in the description.

In some embodiments, the control unit 110 determines the obstacle detection zone 120 by further determining a total length of the obstacle detection zone 120. The total length of the obstacle detection zone 120 is e.g., determined based on any one or more out of: The vehicle type of the vehicle 100, the speed or velocity of the vehicle 100, the vehicle route 130 of the vehicle 100, the location of the vehicle 100, and the brake distance of the vehicle 100. The velocity of the vehicle 100 may be the velocity the vehicle 100 is currently travelling at. Alternatively, or additionally, the velocity may be a future velocity of the vehicle 100. Thus, when determining the total length of the obstacle detection zone 120, the control unit 110 may take the current velocity of the vehicle 100 or the future velocity of the vehicle 100 into account. Alternatively, a combination of the current velocity and one or more future velocities of the vehicle 100 may be taken into account when determining the total length. As an example, a higher velocity of the vehicle 100 may result in a longer obstacle detection zone 120. This since at a higher velocity the brake distance increases. Similarly, speed or future speed of the vehicle 100 may be taken into account when determining a length of the obstacle detection zone 120.

Different vehicle types have different properties, such as brake distance, dimensions, acceleration and turning radius. This may have impact on the possibility to avoid collisions with obstacles along the vehicle route of the vehicle 100. Thus, the type of the vehicle may be taken into account when determining the length of the obstacle detection zone 120.

The total length of the obstacle detection zone 120 may, as mentioned above, be determined based on the vehicle route 130, e.g., the obtained vehicle route, of the vehicle 100. Thus, the total length may differ based on the vehicle route 130. E.g., a gradient of the vehicle route 130 may be considered when determining the total length of the obstacle detection zone 120. The gradient may e.g., be a current gradient the vehicle route 130, such as the gradient of the current position of the vehicle 100, and/or a future gradient of the vehicle route 130. The future gradient may e.g., be comprised in, and obtained from, data related to the obtained vehicle route 130. The data related to the vehicle route 130 may e.g., be obtained together with, such as at the same time, as the vehicle route 130. The current gradient may be obtained from one or more sensors in the vehicle 100 and/or from a system in the vehicle, e.g., the vehicle control system 101 or another system comprised in the vehicle 100. A positive gradient of the vehicle route may result in that the floor of the mining environment 150 is detected as an obstacle in the obstacle detection zone 120. Alternatively, or additionally, a negative gradient of the vehicle route 130 may result that the roof of the mining environment 150 may be detected as an obstacle in the obstacle detection zone 120. Thus, the total length of obstacle detection zone 120 may be determined, e.g., adapted, based on the vehicle route 130, such as the current and/or future gradient of the vehicle route 130. A positive gradient may mean that the vehicle route 130 slants upwards in the moving direction of the vehicle 100. A negative gradient may mean that the vehicle route 130 slants downward in the moving direction of the vehicle 100.

Taking the brake distance of the vehicle 100 into account when determining the total length of the obstacle detection zone 120 may mean that the total length may vary based on the brake distance. E.g., with a longer brake distance, the vehicle 100 may need to detect obstacles along the vehicle route 130 when they are farther away compared to when the vehicle 100 has a shorter brake distance. This in order to avoid a collision with the obstacle, or at least minimize the force of the collision. Thus, depending on the brake distance of the vehicle 100, the total length of the obstacle detection zone 120 may be determined to be either shorter or longer. The brake distance may in some examples depend on the velocity of the vehicle 100. As mentioned above one or more of the parameters vehicle type, velocity, vehicle route, location and brake distance of the vehicle 100 may form the basis when determining the total length of the obstacle detection zone 120. Thus, the total length may be determined based on a combination of two or more of said parameters. As an example, the vehicle 100 may have a certain brake distance and traveling at a certain velocity. The total length of the obstacle detection 120 zone may then be determined based on the velocity of the vehicle 100 and the brake distance of the vehicle.

In some embodiments, a length of each of the first detection zone 121 and the one or more subsequent detection zones 122, 123 are at least equal to a length of a corresponding route segment 131, 132, 133. Any one out of: The route segments 131, 132, 133 may be equal in length, or at least one of the route segments 131, 132, 133 may have a different length than the other route segments. Alternatively, or additionally, the last of the subsequent detection zone 122, 123 may be shorter the length of the corresponding route segment 132, 133. The last of the subsequent detection zones 122, 123 may be the subsequent detection zone 122, 123 located farthest away from the first detection zone 121. This so that the first detection zone 121 and the one or more subsequent detection zones 122, 123 fits within the total length of the obstacle detection zone 120. In other words, a length of a last subsequent detection zone 122, 123 may be adapted to fit within the total length of the obstacle detection zone.

In some embodiments, the control unit 110 determines the obstacle detection zone 120 by further determining the number of subsequent detection zones 122, 123 to be comprised in the obstacle detection zone 120. The number of subsequent detection zones 122, 123 may be determined based on the total length of the obstacle detection zone 120. As mentioned above, each subsequent detection zone 122, 123 may be located at a corresponding vehicle route segment 132, 133. As an example, the control unit 110 may then determine the number of vehicle route segments 131, 132, 133 corresponding to the total length. The number of subsequent detection zones 122, 123 may be determined to be one less than the determined number of vehicle route segments 131, 132, 133. This since the first detection zone 121 is located at the first vehicle route segment 131.

### Action 403

In some embodiments, when the vehicle 100 moves along the vehicle route 130 such that the location of the vehicle 100 changes, the control unit 110 repetitively updates the obstacle detection zone 120 by repeating the actions according to the determining described in Action 402 above. In other words, when the vehicle 100 has changed its location, the control unit 110 determines the obstacle detection zone 120 again. Repetitively updating the obstacle detection zone 120 may mean that the obstacle detection zone 120 is re-determined at certain intervals along the vehicle route 130.

An interval may be the time between two localization, such as location, updates of the vehicle 100. E.g., the obstacle detection zone is re-determined, such as updated, when the localization of the vehicle 100 is determined and/or updated. This may mean that the interval is the time between two consecutive localization determinations, such as updates. In other words, the determination, or updating, of the localization of the vehicle 100 may trigger the obstacle detection zone 120 to be re-determined. Alternatively, the obstacle detection zone 120 is re-determined, such as repeatedly updated, e.g., every second, third or fourth localization update. Second, third and fourth is only examples, and the control unit 110 may be configured with any other number of localization updates between the updating of the obstacle determination zone 120. Alternatively, or additionally, the interval may be a fixed, such as configured, time interval. Additionally, or alternatively, the time interval may depend e.g., the velocity of the vehicle 100. This may mean that the time interval is longer for a lower velocity and shorter for a higher velocity. Thus, a higher velocity may result in a shorter time interval than lower velocity. Or put differently, an increase in velocity results in a shortened time interval. In other words, the obstacle detection zone 120 may be determined, such as updated, at certain time intervals.

In some examples, repetitively updating the obstacle detection zone 120 may mean that the obstacle detection is re-determined continuously. This may mean that as soon as the obstacle detection zone 120 has been determined, the process is repeated. New and/or updated data, such as e.g., updated localization, velocity of the vehicle 100, vehicle route 130 information, and/or other data and/or parameters discussed herein, may be taken into account when re-determining the obstacle detection zone.

Alternatively, or additionally, the interval may be a distance interval. This may mean that when the vehicle 100 has moved, such as changed its location, a certain distance, the obstacle detection zone is re-determined. The distance interval may be the length of a route segment. Thus, every time the vehicle 100 enters one of the route segments 131, 132, 133, the obstacle detection zone 120 is determined as described above. The length of the distance interval may alternatively be longer than one route segment, e.g., a multiple of the length of a route segment, or shorter than one route segment, or any arbitrary defined distance. This may be performed as an alternative, or in addition, to the examples discussed above.

### Action 404

In some embodiments, when determined that the location reliability of the vehicle 100 is below a threshold, the control unit 110 changes method for obstacle detection by stopping to use the determined obstacle detection zone 120. The control unit 110 then switches to another method for obstacle detection. The location reliability may be determined by receiving an indication from e.g., the vehicle control system 101. Alternatively, the indication may be received from another system of entity inside or outside the vehicle 100. The indication may indicate that the location reliability is below the threshold. Alternatively, the indication may indicate a location reliability value, and the control unit 110 then determines whether the location reliability value is below the threshold. The indication may be received periodically, e.g., at periodic intervals. Alternatively, or additionally, the indication may be received aperiodically, e.g., by a request from the control unit 110, or only when location reliability is below the threshold. The other method may be the obstacle detection method as described together with Fig. 1. As described above, the geometrical shape of the obstacle detection zone according to this other obstacle detection method, is determined based on e.g., the hinge angle of the vehicle and/or the turning position of the wheels of the vehicle. Alternatively, the other method of obstacle detection may be any other obstacle detection method the control unit 110 is configured to perform.

### Action 405

The control unit 110 detects an obstacle within the obstacle detection zone 120. The obstacle may be any unexpected object determined to be located within the obstacle detection zone 120. Unexpected may mean that the object is not supposed to be located at that location, e.g., such that the object prevents further moving of the vehicle 100 along the vehicle route 130, or risks damaging the vehicle 100 if further moving of the vehicle 100 along the vehicle route 130 is performed.

In some embodiment, the control unit 110 detects the obstacle within the obstacle detection zone 120 by e.g., obtaining sensor data from one or more object detection sensors 160 and correlating the obtained sensor data with the determined obstacle detection zone 120. The control unit 110 may determine the presence of the obstacle when an object detection reading from the obtained sensor data is within at least one of the first detection zone 121 and the one or more subsequent detection zones 122, 123. This may mean that the object detection reading is within the obstacle detection zone. This since the first detection zone 121 and the one or more subsequent detection zones 122, 123 are comprised in the obstacle detection zone 120. The control unit 110 may correlate the obtained sensor data with the determined obstacle detection zone 120 by e.g., determining that the sensor data comprises an object detection reading. Then the control unit 110 may determine the location of the object and compare the determined location of the object with the obstacle detection zone 120. This way, when the detected object is located within the obstacle detection zone 120, i.e., within at least one of the first detection zone 121 and one or more subsequent detection zones 122, 123, the presence of an obstacle is determined.

This allows an efficient obstacle detection method which reduces the risk of false obstacle detections. This since only obstacles located in the obstacle detection zone 120, and accordingly along the vehicle route 130, will be detected. A reduced number of false obstacle detections results in a reduced number of unnecessary stops for the vehicles, e.g., the vehicle 100, improved rate of production and reduced risk of damages to vehicles caused but sudden stops.

### Action 406

The control unit 110 provides an obstacle alert indication to the vehicle control system 101. The indication may alert the vehicle control system 101 of the presence of the detected obstacle. The indication may, in some examples, further comprise a location of the detected obstacle. The obstacle alert indication may allow the vehicle control system to take appropriate actions to avoid, or minimize the impact of, a collision with the detected obstacle.

Embodiments mentioned above will now be further described and exemplified. The embodiments below are applicable to and may be combined with any suitable embodiment described above.

As mentioned above in the description of Fig. 4, different vehicle types may have different properties. These properties may, e.g., be geometrical shape, size and turning radius. Further, a vehicle, such as the vehicle 100 in the description of Fig. 2, may require more space when turning and/or the vehicle 100 may shortcut through the turning, thus being closer to inner wall than when driving straight ahead. This may differ depending on the vehicle type of the vehicle 100. To mitigate this, the geometrical shape of the first detection zone 121 and/or the one or more subsequent detection zones 122, 123 comprised in the obstacle detection zone 120, as describe above in the description of Figs. 3a-c and 4, may be adapted. As an example, a width of the geometrical shapes of the first detection zone 121 and the one or more subsequent detection zones 122, 123, may be adaptively determined based on the size, such as e.g., a width, of the vehicle 100, a dynamical width of the vehicle and a curvature of a corresponding vehicle route segment 131, 132, 133 of the vehicle route 130. The dynamical width of the vehicle 100 may be the width of vehicle 100 when turning, e.g., the difference between an inner radius and an outer radius of the vehicle 100 when turning. The curvature of the corresponding route segment may e.g., be the curvature of the vehicle route 130 calculated over the corresponding route segment 131, 132, 133 and a number of successively adjacent route segments. Based on e.g., one or more of the width of the vehicle 100, the dynamical width of the vehicle 100 and the curvature of the corresponding route segment, the width of the first detection zone 121, and/or the one or more subsequent detection zones 122, 123 may be adaptively determined. As another example, an offset to the first detection zone 121 and/or the one or more subsequent detection zones 121, 123 may be adaptively determined. The offset may e.g., be an offset relative the corresponding route segment 131, 132, 133. The offset may be determined based on the curvature of the corresponding route segment 131, 132, 133 and a vehicle offset of the vehicle 100. The vehicle offset may be an offset of the vehicle 100 relative the corresponding route segment 131, 132, 133 when turning. In other words, the width of the first detection zone 121 and/or the one or subsequent detection zones 122, 123, as well as an offset of said first detection zone 121 and/or the one or subsequent detection zones 122, 123, may be adaptively determined taking properties of the vehicle 100 into account. This may mean that the geometrical shape of at least one of the one or more subsequent detection zones 122, 123 may represent an increase of the geometrical shape, e.g., the size of the geometrical shape, of the first detection zone 121 and/or a preceding subsequent detection zone 122, 123. This to improve obstacle detection, avoid, or at least lessen the impact of, collisions, reduce false obstacle detections and thus, mitigate the negative impact on production caused by this.

Figure 5a disclose an example configuration of a control unit, e.g., the control unit 110 described in the detailed description of Fig. 2. The control unit 110 is configured to provide obstacle detection for a vehicle 100 adapted to operate in a mining environment 150. The vehicle and mining environment may be the vehicle 100 and mining environment 150 described in reference to Fig. 2 and 3a-c. The control unit 110 comprises a memory 580 operable to store instructions and processing circuitry 570 operable to execute the instructions. The control unit 110 may comprise **an input and output interface 500** configured to communicate with, e.g., the vehicle control system 101 in the vehicle 100, a traffic control system, e.g., the traffic control system 140 described in the detailed description of Fig. 2, distributed parts of the control unit 110 and with other systems, nodes and/or equipment in the mining environment 150.

**Fig. 5b** also discloses an example configuration of processing circuitry for a localization controller, e.g., the processing circuitry 570 disclosed in Fig. 5a.

The control unit 110 may be configured to, e.g. by means of an obtaining unit 510 in the control unit 110, obtain, from the traffic control system 140, the vehicle route 130 of the vehicle 100.

The control unit 110 is configured to, e.g. by means of a **determining unit 520** in the control unit 110, determine an obstacle detection zone 120 along the obtained vehicle route 130 in front of the vehicle 100. The vehicle route 130 is adapted to comprise multiple route segments 131, 132, 133. The obstacle detection zone 120 is adapted to comprise the first detection zone 121 and one or more subsequent detection zones 122, 123. The first detection zone 121 is adapted to be located at a first route segment 131. The respective one or more subsequent detection zones 122, 123 is adapted to be located along the obtained route. The one or more subsequent detection zones 122, 123 are adapted to be determined based on a geometrical shape of the vehicle 100, a geometrical shape of an immediately preceding detection zone, and/or a detected vehicle route 130 offset.

Each subsequent detection zone 122, 123 may be adapted to be located at a respective subsequent route segment 132, 133.

A geometrical shape of at least one of the one or more subsequent detection zones 122, 123 may be adapted to represent a reduction of the geometrical shape of the first detection zone 121.

The geometrical shape of each of the one or more subsequent detection zones 122, 123 may be successively decreased.

The first detection zone 121 may be adapted to have a first width and the one or more subsequent detection zones 122, 123 may be adapted to have successively decreasing widths. The width may be adapted to be measured perpendicular to a corresponding route segment 131, 132, 133. The first detection zone 121 may be adapted to be positioned closer to the vehicle 100 than any of the one or more subsequent detection zones 122, 123.

The length of each of the first detection zone 121 and the one or more subsequent detection zones 122, 123 may be adapted to be at least equal to the length of a corresponding route segment 131, 132, 133. Any one out of: The route segments 131, 132, 133 are adapted to be equal in length, or at least one of the route segments 131, 132, 133 is adapted to have a different length than the other route segments.

The control unit 110 may further be configured to, e.g., by means of the **determining unit 520** in the control unit 110, determine the obstacle detection zone 120 by further being configured to determine the number of subsequent detection zones 122, 123 to be comprised in the obstacle detection zone 120.

The control unit 110 may further be configured to, e.g., by means of the **determining unit 520** in the control unit 110, determine the obstacle detection zone 120 by further being configured to determine the total length of the obstacle detection zone 120. The total length of the obstacle detection zone 120 may be determined based on any one or more out of: The vehicle type of the vehicle 100, the velocity of the vehicle 100, the vehicle route 130 of the vehicle 100, the location of the vehicle 100, and the brake distance of the vehicle 100.

The control unit 110 may further be configured to, e.g., by means of a **updating unit 530** in the control unit 110, when the vehicle 100 moves along the vehicle route 130 such that the location of the vehicle 100 changes, repetitively update the obstacle detection zone 120 e.g., by being configured to repeat the actions performed by the determining unit 520.

The control unit 110 may further be configured to, e.g., by means of a **changing unit 540** in the control unit 110, when determined that the location reliability of the vehicle 100 is below a threshold, change method for obstacle detection by stopping to use the determined obstacle detection zone 120, and switching to another method for obstacle detection.

The control unit 110 is configured to, e.g., by means of a **detecting unit 550** in the control unit 110, detecting an obstacle within the obstacle detection zone 120.

The control unit 110 may further be configured to, e.g. by means of the **detecting unit 550** in the control unit 110, detect the obstacle within the obstacle detection zone 120 by further being configured to obtaining sensor data from one or more object detection sensors 160, correlate the obtained sensor data with the determined obstacle detection zone 120, and determine the presence of the obstacle when an object detection reading from the obtained sensor data is within at least one of the first detection zone 121 and the one or more subsequent detection zones 122, 123.

The control unit 110 is configured to, e.g. by means of a **providing unit 560** in the control unit 110, provide an obstacle alert indication to the vehicle control system 101.

The embodiments herein may be implemented through the processing circuitry 570 in the control unit 110 depicted in Figure 5a, together with respective computer program code for performing the functions and actions of the embodiments herein. The processing circuitry 570 may comprise one or more processors and one or more memory units. The memory units may be the memory 580. The program code mentioned above may also be provided as a computer program product, for instance in the form of a data carrier carrying computer program code for performing the embodiments herein when being loaded into the control unit 110. One such carrier may be in the form of a CD ROM disc. It is however feasible with other data carriers such as a memory stick. The computer program code may furthermore be provided as pure program code on a server and downloaded to the control unit 110.

The memory 580 of the control unit 110 may further comprise one or more memory units. The memory 580 is configured to store instructions executable by the processing circuitry 570. The memory 580 is arranged to be used to store e.g. information, messages, indications, configurations, thresholds, obstacle detection zones, time periods, conditions, locations, sensor data and applications to perform the methods herein when being executed in the control unit 110.

In some embodiments, a computer program 590 comprises instructions, which when executed by the processing circuitry 570, e.g., of the respective at least one processor of the processing circuitry 570, cause the processing circuitry 570 of the control unit 110 to perform the actions above.

In some embodiments, a respective carrier 595 comprises the respective computer program 590, wherein the carrier 595 is one of an electronic signal, an optical signal, an electromagnetic signal, a magnetic signal, an electric signal, a radio signal, a microwave signal, or a computer-readable storage medium.

Those skilled in the art will appreciate that the units in the control unit 110 described above may refer to a combination of analogue and digital circuits, and/or one or more processors configured with software and/or firmware, e.g., stored in the control unit 110, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A computer-implemented method for obstacle detection for a vehicle (100) operating in a mining environment (150), the method comprising:
*determining* (402) an obstacle detection zone (120) along an obtained vehicle route (130) in front of the vehicle (100), the vehicle route (130) comprising multiple route segments (131, 132, 133), which obstacle detection zone (120) comprises a first detection zone (121) and one or more subsequent detection zones (122, 123), the first detection zone (121) being located at a first route segment (131) and the respective one or more subsequent detection zones (122, 123) being located along the obtained vehicle route (130), wherein the one or more subsequent detection zones (122, 123) are determined based on a geometrical shape of the vehicle (100), a geometrical shape of an immediately preceding detection zone, and/or a detected vehicle route offset, wherein a geometrical shape of at least one of the one or more subsequent detection zones (122, 123) represents a reduction of the geometrical shape of the first detection zone (121), and
when *detecting* (405) an obstacle within the obstacle detection zone (120), *providing* (406) an obstacle alert indication to a vehicle control system (101).

2. The method according to claim 1, wherein each subsequent detection zone (122, 123) is located at a respective subsequent route segment (132, 133).

3. The method according to any of the preceding claims, wherein the geometrical shape of each of the one or more subsequent detection zones (122, 123) is successively decreased.

4. The method according to any of the preceding claims, wherein *detecting* (405) an obstacle within the obstacle detection zone (120) comprises:
*obtaining* sensor data from one or more object detection sensors (160),
*correlating* the obtained sensor data with the determined obstacle detection zone (120), and
*determining* the presence of an obstacle when an object detection reading from the obtained sensor data is within at least one of the first detection zone (121) and the one or more subsequent detection zones (122, 123).

5. The method according to any of the preceding claims, wherein the first detection zone (121) has a first width and the one or more subsequent detection zones (122, 123) have successively decreasing widths, wherein the width is measured perpendicular to a corresponding route segment (131, 132, 133), and wherein the first detection zone (121) is positioned closer to the vehicle (100) than any of the one or more subsequent detection zones (122, 123).

6. The method according to any of the preceding claims, wherein a length of each of the first detection zone (121) and the one or more subsequent detection zones (122, 123) is at least equal to a length of a corresponding route segment (131, 132, 133), and wherein any one out of:
- the route segments (131, 132, 133) are equal in length, or
- at least one of the route segments (131, 132, 133) has a different length than the other route segments.

7. The method according to any of the preceding claims, wherein *determining (402)* the obstacle detection zone (120) further comprises determining the number of subsequent detection zones (122, 123) to be comprised in the obstacle detection zone (120).

8. The method according to any of the preceding claims, wherein *determining (402)* the obstacle detection zone (120) further comprises determining a total length of the obstacle detection zone (120), wherein the total length of the obstacle detection zone (120) is determined based on any one or more out of:
- the vehicle type of the vehicle (100),
- the velocity of the vehicle (100),
- the vehicle route (130) of the vehicle (100),
- the location of the vehicle (100), and
- the brake distance of the vehicle (100).

9. The method according to any of the preceding claims, further comprising:
when the vehicle (100) moves along the vehicle route (130) such that the location of the vehicle (100) changes, repetitively *updating* (403) the obstacle detection zone (120) by repeating the actions according to the *determining* (402).

10. The method according to any of the preceding claims, further comprising:
when determined that the location reliability of the vehicle (100) is below a threshold, *changing* (404) method for obstacle detection by stopping to use the determined obstacle detection zone (120), and switching to another method for obstacle detection.

11. The method according to any of the preceding claims, further comprising:
*obtaining* (401), from a traffic control system (140), the vehicle route (130) of the vehicle.

12. A computer program (590) comprising instructions, which when executed by a processing circuitry (570), cause the processing circuitry (570) to perform actions according to any of the claims 1-11.

13. A control unit (110) configured to provide obstacle detection for a vehicle (100) adapted to operate in a mining environment (150), the control unit (110) comprising a memory (580) operable to store instructions and processing circuitry (570) operable to execute the instructions, such that the control unit (110) is operable to:
*determine* an obstacle detection zone (120) along an obtained vehicle route (130) in front of the vehicle (100), the vehicle route (130) being adapted to comprise multiple route segments (131, 132, 133), which obstacle detection zone (120) is adapted to comprise a first detection zone (121) and one or more subsequent detection zones (122, 123), the first detection zone (121) adapted to be located at a first route segment (131) and the respective one or more subsequent detection zones (122, 123) adapted to be located along the obtained vehicle route, wherein the one or more subsequent detection zones (122, 123) are adapted to be determined based on a geometrical shape of the vehicle (100), a geometrical shape of an immediately preceding detection zone, and/or a detected vehicle route offset, wherein a geometrical shape of at least one of the one or more subsequent detection zones (122, 123) represents a reduction of the geometrical shape of the first detection zone (121),
when *detecting* an obstacle within the obstacle detection zone (120), *provide* an obstacle alert indication to a vehicle control system (101).

14. A vehicle (100) adapted to operate in a mining environment (150) comprising a control unit (110) configured to provide obstacle detection for the vehicle (100), the control unit (110) comprising a memory (580) operable to store instructions and processing circuitry (570) operable to execute the instructions, such that the control unit (110) is operable to:
*determine* an obstacle detection zone (120) along an obtained vehicle route (130) in front of the vehicle (100), the vehicle route (130) being adapted to comprise multiple route segments (131, 132, 133), which obstacle detection zone (120) is adapted to comprise a first detection zone (121) and one or more subsequent detection zones (122, 123), the first detection zone (121) adapted to be located at a first route segment (131) and the respective one or more subsequent detection zones (122, 123) adapted to be located along the obtained vehicle route, wherein the one or more subsequent detection zones (122, 123) are adapted to be determined based on a geometrical shape of the vehicle (100), a geometrical shape of an immediately preceding detection zone, and/or a detected vehicle route offset, wherein a geometrical shape of at least one of the one or more subsequent detection zones (122, 123) represents a reduction of the geometrical shape of the first detection zone (121),
when *detecting* an obstacle within the obstacle detection zone (120), *provide* an obstacle alert indication to a vehicle control system (101).

## Patentansprüche

1. Computerimplementiertes Verfahren zur Hinderniserkennung für ein Fahrzeug (100), das in einer Bergbauumgebung (150) betrieben wird, wobei das Verfahren Folgendes umfasst:
*Bestimmen* (402) einer Hinderniserfassungszone (120) entlang einer erhaltenen Fahrzeugroute (130) vor dem Fahrzeug (100), wobei die Fahrzeugroute (130) mehrere Routenabschnitte (131, 132, 133) umfasst, wobei die Hinderniserfassungszone (120) eine erste Erfassungszone (121) und eine oder mehrere nachfolgende Erfassungszonen (122, 123) umfasst, wobei die erste Erfassungszone (121) an einem ersten Routenabschnitt (131) angeordnet ist und die jeweilige eine oder die mehreren nachfolgenden Erfassungszonen (122, 123) entlang der erhaltenen Fahrzeugroute (130) angeordnet sind, wobei die eine oder die mehreren nachfolgenden Erfassungszonen (122, 123) auf der Grundlage von einer geometrischen Form des Fahrzeugs (100), einer geometrischen Form einer unmittelbar vorhergehenden Erfassungszone und/oder einem erfassten Fahrzeugroutenversatz bestimmt werden, wobei eine geometrische Form von mindestens einer der einen oder der mehreren nachfolgenden Erfassungszonen (122, 123) eine Verringerung der geometrischen Form der ersten Erfassungszone (121) darstellt, und
beim *Erfassen* (405) eines Hindernisses innerhalb der Hinderniserfassungszone (120), *Bereitstellen* (406) eines Hinderniswarnhinweises an ein Fahrzeugsteuersystem (101).

2. Verfahren nach Anspruch 1, wobei jede nachfolgende Erfassungszone (122, 123) an einem jeweiligen nachfolgenden Routenabschnitt (132, 133) angeordnet ist.

3. Verfahren nach einem der vorstehenden Ansprüche, wobei die geometrische Form jeder der einen oder der mehreren nachfolgenden Erfassungszonen (122, 123) sukzessive verringert wird.

4. Verfahren nach einem der vorstehenden Ansprüche, wobei das Erfassen (405) eines Hindernisses innerhalb der Hinderniserfassungszone (120) Folgendes umfasst:
*Erhalten* von Sensordaten von einem oder mehreren Objekterfassungssensoren (160),
*Korrelieren* der erhaltenen Sensordaten mit der bestimmten Hinderniserfassungszone (120), und
*Bestimmen* des Vorhandenseins eines Hindernisses, wenn ein Objekterfassungswert aus den erhaltenen Sensordaten innerhalb von mindestens einer der ersten Erfassungszone (121) und der einen oder der mehreren nachfolgenden Erfassungszonen (122, 123) liegt.

5. Verfahren nach einem der vorstehenden Ansprüche, wobei die erste Erfassungszone (121) eine erste Breite aufweist und die eine oder die mehreren nachfolgenden Erfassungszonen (122, 123) sukzessive abnehmende Breiten aufweisen, wobei die Breite senkrecht zu einem entsprechenden Routenabschnitt (131, 132, 133) gemessen wird, und wobei die erste Erfassungszone (121) näher an dem Fahrzeug (100) positioniert ist als jede der einen oder der mehreren nachfolgenden Erfassungszonen (122, 123).

6. Verfahren nach einem der vorstehenden Ansprüche, wobei eine Länge jeder der ersten Erfassungszone (121) und der einen oder der mehreren nachfolgenden Erfassungszonen (122, 123) mindestens gleich einer Länge eines entsprechenden Routenabschnitts (131, 132, 133) ist, und wobei eines aus Folgendem gilt:
- die Routenabschnitte (131, 132, 133) sind gleich lang, oder
- mindestens einer der Routenabschnitte (131, 132, 133) weist eine andere Länge als die anderen Routenabschnitte auf.

7. Verfahren nach einem der vorstehenden Ansprüche, wobei das *Bestimmen* (402) der Hinderniserfassungszone (120) weiter das Bestimmen der Anzahl von nachfolgenden Erfassungszonen (122, 123) umfasst, die in der Hinderniserfassungszone (120) umfasst sein sollen.

8. Verfahren nach einem der vorstehenden Ansprüche, wobei das *Bestimmen* (402) der Hinderniserfassungszone (120) weiter das Bestimmen einer Gesamtlänge der Hinderniserfassungszone (120) umfasst, wobei die Gesamtlänge der Hinderniserfassungszone (120) auf der Grundlage von jedem einen oder mehreren aus Folgendem bestimmt wird:
- dem Fahrzeugtyp des Fahrzeugs (100),
- der Geschwindigkeit des Fahrzeugs (100),
- der Fahrzeugroute (130) des Fahrzeugs (100),
- der Position des Fahrzeugs (100), und
- dem Bremsweg des Fahrzeugs (100).

9. Verfahren nach einem der vorstehenden Ansprüche, weiter umfassend:
wenn sich das Fahrzeug (100) entlang der Fahrzeugroute (130) bewegt, sodass sich die Position des Fahrzeugs (100) ändert, wiederholtes *Aktualisieren* (403) der Hinderniserfassungszone (120) durch Wiederholen der Aktionen nach dem *Bestimmen* (402).

10. Verfahren nach einem der vorstehenden Ansprüche, weiter umfassend:
wenn bestimmt wird, dass die Positionszuverlässigkeit des Fahrzeugs (100) unter einem Schwellenwert liegt, *Ändern* (404) des Verfahrens zur Hinderniserkennung durch Beenden der Verwendung der bestimmten Hinderniserfassungszone (120) und Umschalten auf ein anderes Verfahren zur Hinderniserkennung.

11. Verfahren nach einem der vorstehenden Ansprüche, weiter umfassend:
*Erhalten* (401) der Fahrzeugroute (130) des Fahrzeugs von einem Verkehrssteuersystem (140).

12. Computerprogramm (590), das Anweisungen umfasst, die, wenn sie von einer Verarbeitungsschaltung (570) ausgeführt werden, die Verarbeitungsschaltung (570) veranlassen, Aktionen nach einem der Ansprüche 1-11 auszuführen.

13. Steuereinheit (110), die konfiguriert ist, um Hinderniserkennung für ein Fahrzeug (100) bereitzustellen, das für den Betrieb in einer Bergbauumgebung (150) angepasst ist, wobei die Steuereinheit (110) einen Speicher (580), betriebsfähig zum Speichern von Anweisungen, und eine Verarbeitungsschaltung (570), betriebsfähig zum Ausführen der Anweisungen, umfasst, sodass die Steuereinheit (110) betriebsfähig ist:
eine Hinderniserfassungszone (120) entlang einer erhaltenen Fahrzeugroute (130) vor dem Fahrzeug (100) *zu bestimmen*, wobei die Fahrzeugroute (130) angepasst ist, mehrere Routenabschnitte (131, 132, 133) zu umfassen, wobei die Hinderniserfassungszone (120) angepasst ist, eine erste Erfassungszone (121) und eine oder mehrere nachfolgende Erfassungszonen (122, 123) zu umfassen, wobei die erste Erfassungszone (121) angepasst ist, an einem ersten Routenabschnitt (131) angeordnet zu sein, und die jeweilige eine oder die mehreren nachfolgenden Erfassungszonen (122, 123) angepasst sind, entlang der erhaltenen Fahrzeugroute angeordnet zu sein, wobei die eine oder die mehreren nachfolgenden Erfassungszonen (122, 123) angepasst sind, auf der Grundlage von einer geometrischen Form des Fahrzeugs (100), einer geometrischen Form einer unmittelbar vorhergehenden Erfassungszone und/oder einem erfassten Fahrzeugroutenversatz bestimmt zu werden, wobei eine geometrische Form von mindestens einer der einen oder der mehreren nachfolgenden Erfassungszonen (122, 123) eine Verringerung der geometrischen Form der ersten Erfassungszone (121) darstellt,
beim *Erfassen* eines Hindernisses innerhalb der Hinderniserfassungszone (120) einen Hinderniswarnhinweis an ein Fahrzeugsteuersystem (101) *bereitzustellen*.

14. Fahrzeug (100), das für den Betrieb in einer Bergbauumgebung (150) angepasst ist, umfassend eine Steuereinheit (110), die konfiguriert ist, um Hinderniserkennung für das Fahrzeug (100) bereitzustellen, wobei die Steuereinheit (110) einen Speicher (580), betriebsfähig zum Speichern von Anweisungen, und eine Verarbeitungsschaltung (570), betriebsfähig zum Ausführen der Anweisungen, umfasst, sodass die Steuereinheit (110) betriebsfähig ist:
eine Hinderniserfassungszone (120) entlang einer erhaltenen Fahrzeugroute (130) vor dem Fahrzeug (100) *zu* bestimmen, wobei die Fahrzeugroute (130) angepasst ist, mehrere Routenabschnitte (131, 132, 133) zu umfassen, wobei die Hinderniserfassungszone (120) angepasst ist, eine erste Erfassungszone (121) und eine oder mehrere nachfolgende Erfassungszonen (122, 123) zu umfassen, wobei die erste Erfassungszone (121) angepasst ist, an einem ersten Routenabschnitt (131) angeordnet zu sein, und die jeweilige eine oder die mehreren nachfolgenden Erfassungszonen (122, 123) angepasst sind, entlang der erhaltenen Fahrzeugroute angeordnet zu sein, wobei die eine oder die mehreren nachfolgenden Erfassungszonen (122, 123) angepasst sind, auf der Grundlage von einer geometrischen Form des Fahrzeugs (100), einer geometrischen Form einer unmittelbar vorhergehenden Erfassungszone und/oder einem erfassten Fahrzeugroutenversatz bestimmt zu werden, wobei eine geometrische Form von mindestens einer der einen oder der mehreren nachfolgenden Erfassungszonen (122, 123) eine Verringerung der geometrischen Form der ersten Erfassungszone (121) darstellt,
beim *Erfassen* eines Hindernisses innerhalb der Hinderniserfassungszone (120) einen Hinderniswarnhinweis an ein Fahrzeugsteuersystem (101) *bereitzustellen*.

## Revendications

1. Procédé, mis en œuvre par ordinateur, de détection d'obstacle pour un véhicule (100) fonctionnant dans un environnement minier (150), le procédé comprenant :
*la détermination* (402) d'une zone (120) de détection d'obstacle le long d'un itinéraire (130) de véhicule obtenu devant le véhicule (100), l'itinéraire (130) de véhicule comprenant plusieurs segments d'itinéraire (131, 132, 133), laquelle zone (120) de détection d'obstacle comprend une première zone de détection (121) et une ou plusieurs zones de détection ultérieures (122, 123), la première zone de détection (121) étant située au niveau d'un premier segment d'itinéraire (131) et les une ou plusieurs zones de détection ultérieures (122, 123) respectives étant situées le long de l'itinéraire (130) de véhicule obtenu, dans lequel les une ou plusieurs zones de détection ultérieures (122, 123) sont déterminées sur la base d'une forme géométrique du véhicule (100), d'une forme géométrique d'une zone de détection immédiatement précédente, et/ou d'un décalage d'itinéraire de véhicule détecté, dans lequel une forme géométrique d'au moins une des une ou plusieurs zones de détection ultérieures (122, 123) représente une réduction de la forme géométrique de la première zone de détection (121), et
lors de la *détection* (405) d'un obstacle à l'intérieur de la zone (120) de détection d'obstacle, la *fourniture* (406) d'une indication d'alerte d'obstacle à un système (101) de commande de véhicule.

2. Procédé selon la revendication 1, dans lequel chaque zone de détection ultérieure (122, 123) est située au niveau d'un segment d'itinéraire (132, 133) ultérieur respectif.

3. Procédé selon l'une quelconque des revendications précédentes, dans lequel la forme géométrique de chacune des une ou plusieurs zones de détection ultérieures (122, 123) est successivement diminuée.

4. Procédé selon l'une quelconque des revendications précédentes, dans lequel la détection (405) d'un obstacle à l'intérieur de la zone (120) de détection d'obstacle comprend :
*l'obtention de* données de capteur provenant d'un ou plusieurs capteurs (160) de détection d'objet,
*la mise en corrélation* des données de capteur obtenues avec la zone (120) de détection d'obstacle déterminée, et
*la détermination de* la présence d'un obstacle lorsqu'une lecture de détection d'objet à partir des données de capteur obtenues est à l'intérieur d'au moins l'une parmi la première zone de détection (121) et les une ou plusieurs zones de détection ultérieures (122, 123).

5. Procédé selon l'une quelconque des revendications précédentes, dans lequel la première zone de détection (121) présente une première largeur et les une ou plusieurs zones de détection ultérieures (122, 123) présentent des largeurs successivement décroissantes, dans lequel la largeur est mesurée perpendiculairement à un segment d'itinéraire (131, 132, 133) correspondant, et dans lequel la première zone de détection (121) est positionnée plus près du véhicule (100) que l'une quelconque des une ou plusieurs zones de détection ultérieures (122, 123).

6. Procédé selon l'une quelconque des revendications précédentes, dans lequel une longueur de chacune parmi la première zone de détection (121) et les une ou plusieurs zones de détection ultérieures (122, 123) est au moins égale à une longueur d'un segment d'itinéraire (131, 132, 133) correspondant, et dans lequel l'un quelconque parmi :
- les segments d'itinéraire (131, 132, 133) présentent des longueurs égales, ou
- au moins un des segments d'itinéraire (131, 132, 133) présente une longueur différente des autres segments d'itinéraire.

7. Procédé selon l'une quelconque des revendications précédentes, dans lequel la *détermination* (402) de la zone (120) de détection d'obstacle comprend en outre la détermination du nombre de zones de détection ultérieures (122, 123) à comprendre dans la zone (120) de détection d'obstacle.

8. Procédé selon l'une quelconque des revendications précédentes, dans lequel la *détermination* (402) de la zone (120) de détection d'obstacle comprend en outre la détermination d'une longueur totale de la zone (120) de détection d'obstacle, dans lequel la longueur totale de la zone (120) de détection d'obstacle est déterminée sur la base de l'un quelconque ou plusieurs parmi :
- le type de véhicule du véhicule (100),
- la vitesse du véhicule (100),
- l'itinéraire (130) de véhicule du véhicule (100),
- la localisation du véhicule (100), et
- la distance de freinage du véhicule (100).

9. Procédé selon l'une quelconque des revendications précédentes, comprenant en outre :
lorsque le véhicule (100) se déplace le long de l'itinéraire (130) de véhicule de sorte que la localisation du véhicule (100) change, la *mise à jour* (403) répétitive de la zone (120) de détection d'obstacle en répétant les actions selon la *détermination* (402).

10. Procédé selon l'une quelconque des revendications précédentes, comprenant en outre :
lorsqu'il est déterminé que la fiabilité de localisation du véhicule (100) est inférieure à un seuil, le *changement* (404) du procédé de détection d'obstacle en s'arrêtant pour utiliser la zone (120) de détection d'obstacle déterminée, et le passage à un autre procédé de détection d'obstacle.

11. Procédé selon l'une quelconque des revendications précédentes, comprenant en outre :
*l'obtention* (401), à partir d'un système (140) de commande de trafic, de l'itinéraire (130) de véhicule du véhicule.

12. Programme informatique (590) comprenant des instructions qui, lorsqu'elles sont mises en œuvre par un circuit de traitement (570), amènent le circuit de traitement (570) à mettre en œuvre des actions selon l'une quelconque des revendications 1 à 11.

13. Unité de commande (110) configurée pour fournir une détection d'obstacle pour un véhicule (100) adapté pour fonctionner dans un environnement minier (150), l'unité de commande (110) comprenant une mémoire (580) utilisable pour stocker des instructions et un circuit de traitement (570) utilisable pour mettre en œuvre les instructions, de sorte que l'unité de commande (110) soit utilisable pour :
*déterminer* une zone (120) de détection d'obstacle le long d'un itinéraire (130) de véhicule obtenu devant le véhicule (100), l'itinéraire (130) de véhicule étant adapté pour comprendre plusieurs segments d'itinéraire (131, 132, 133), laquelle zone (120) de détection d'obstacle est adaptée pour comprendre une première zone de détection (121) et une ou plusieurs zones de détection ultérieures (122, 123), la première zone de détection (121) étant adaptée pour être située au niveau d'un premier segment d'itinéraire (131) et les une ou plusieurs zones de détection ultérieures (122, 123) respectives étant adaptées pour être situées le long de l'itinéraire de véhicule obtenu, dans laquelle les une ou plusieurs zones de détection ultérieures (122, 123) sont adaptées pour être déterminées sur la base d'une forme géométrique du véhicule (100), d'une forme géométrique d'une zone de détection immédiatement précédente, et/ou d'un décalage d'itinéraire de véhicule détecté, dans laquelle une forme géométrique d'au moins une des une ou plusieurs zones de détection ultérieures (122, 123) représente une réduction de la forme géométrique de la première zone de détection (121),
lors de la *détection* d'un obstacle à l'intérieur de la zone (120) de détection d'obstacle, fournir une indication d'alerte d'obstacle à un système (101) de commande de véhicule.

14. Véhicule (100) adapté pour fonctionner dans un environnement minier (150) comprenant une unité de commande (110) configurée pour fournir une détection d'obstacle pour le véhicule (100), l'unité de commande (110) comprenant une mémoire (580) utilisable pour stocker des instructions et un circuit de traitement (570) utilisable pour mettre en œuvre les instructions, de sorte que l'unité de commande (110) soit utilisable pour :
*déterminer* une zone (120) de détection d'obstacle le long d'un itinéraire (130) de véhicule obtenu devant le véhicule (100), l'itinéraire (130) de véhicule étant adapté pour comprendre plusieurs segments d'itinéraire (131, 132, 133), laquelle zone (120) de détection d'obstacle est adaptée pour comprendre une première zone de détection (121) et une ou plusieurs zones de détection ultérieures (122, 123), la première zone de détection (121) étant adaptée pour être située au niveau d'un premier segment d'itinéraire (131) et les une ou plusieurs zones de détection ultérieures (122, 123) respectives étant adaptées pour être situées le long de l'itinéraire de véhicule obtenu, dans lequel les une ou plusieurs zones de détection ultérieures (122, 123) sont adaptées pour être déterminées sur la base d'une forme géométrique du véhicule (100), d'une forme géométrique d'une zone de détection immédiatement précédente, et/ou d'un décalage d'itinéraire de véhicule détecté, dans lequel une forme géométrique d'au moins une des une ou plusieurs zones de détection ultérieures (122, 123) représente une réduction de la forme géométrique de la première zone de détection (121),
lors de la *détection* d'un obstacle à l'intérieur de la zone (120) de détection d'obstacle, *fournir* une indication d'alerte d'obstacle à un système (101) de commande de véhicule.
